# EUROPEAN PATENT SPECIFICATION

(11) **EP 4 348 744 B1**
(45) Date of publication and mention of the grant of the patent: **23.04.2025**
(21) Application number: 22735942.9
(22) Date of filing: 20.05.2022
(51) Int. Cl.: H01M 8/2475

(54) **DYNAMIC AIRFLOW CONTROL IN A FUEL CELL SYSTEM**
DYNAMISCHE LUFTSTROMREGELUNG IN EINEM BRENNSTOFFZELLENSYSTEM
RÉGULATION DE FLUX D'AIR DYNAMIQUE DANS UN SYSTÈME DE PILE À COMBUSTIBLE

(30) Priority: 27.05.2021 GB 202107547; 27.05.2021 US 202163193729 P
(43) Date of publication of application: 10.04.2024
(73) Proprietor: Intelligent Energy Limited, Leicestershire LE11 3GB (GB)
(72) Inventor: HOOD, Tom Peter, Loughborough, Leicestershire LE11 3GB (GB); KARMAZYN, Harry John, Loughborough, Leicestershire LE11 3GB (GB); DUFTON, Jesse Thomas Robin, Loughborough, Leicestershire LE11 3GB (GB)
(74) Representative: Keltie LLP
(86) International application number: PCT/GB2022/051287
(87) International publication number: WO 2022/248840

(56) References cited:
- WO-A1-00/54357
- GB-A- 2 548 381
- US-A1- 2011 117 470
- US-A1- 2017 358 811

## Description

### TECHNICAL FIELD

This disclosure generally relates to devices and methods for controlling and evenly distributing a volume of air through an air-cooled fuel cell stack.

### BACKGROUND

Conventional electrochemical fuel cells convert fuel and oxidant into electrical energy and a reaction product. A common type of electrochemical fuel cell comprises a membrane electrode assembly (MEA), which includes a polymeric ion (proton) transfer membrane between an anode and a cathode flow paths or gas diffusion structures. The fuel, such as hydrogen, and the oxidant, such as oxygen from air, are passed over respective sides of the MEA to generate electrical energy and water as the reaction product. A stack may be formed comprising a number of such fuel cells arranged with separate anode and cathode fluid flow paths. Such a stack is typically in the form of a block comprising numerous individual fuel cell plates held together by end plates at either end of the stack. Such fuel cells can be used to provide power for various technology, such as materials handling equipment (MHE) and stationary power applications and unmanned aerial vehicles (UAVs).

It is important that the polymeric ion transfer membrane remains hydrated for efficient operation. It is also important that the temperature of the stack is controlled. Thus, coolant may be supplied to the stack for cooling and/or hydration. It may be necessary at particular times or periodically to purge the flow paths or gas diffusion structures of the fuel cell of coolant, contaminants, or reaction by-products using a purge gas. The purge gas, which may comprise the fuel (e.g. hydrogen) may be flowed through the anode flow path to purge the fuel cell.

In air cooled fuel cell systems, one technique for conditioning fuel cell stacks comprises 'stack pulsing' or 'fan pulsing', in which air flow to the cathodes of the fuel cell stack is periodically shut off or significantly restricted to starve the cathode of oxygen and the stack is discharged at high current through load resistors, such that energy dissipation occurs during this period of air flow restriction.

Air cooled fuel cell stacks can be very sensitive to cathode air flow. A small amount of air movement through a cathode air flow path can still be enough for the stack to produce significant power. The more unwanted air there is, the harder it is to fan pulse. Therefore, achieving highly restricted air flow during a fan pulse can be desirable. A fan pulse can fail, for example, when blocking air flow is inefficient.

Air cooled fuel cell systems have traditionally restricted the cathode air flow for running in cooler conditions by lowering a fan speed or partially closing a flow pathway. These solutions negatively affect the distribution of the cathode flow through the stack, resulting in temperature variations and consequently, poor stack performance. Partial closure results in turbulent flow when in the partially open position results in the pathway varying. This, in turn, makes the fine control of low volume cathode flow an impossibility. Minimum necessary air volume flow with a fan can result in inefficient cooling and poor stack performance.

Document WO 00/54357 describes a fuel cell stack assembly for use in a fuel cell power plant and for producing electricity from fuel and oxidant reactants. The fuel cell stack assembly includes a plurality of individual fuel cells each having an electrolytic medium, a cathode and an anode, and the cell stack assembly is adapted for defining anode flow fields for exposing the anodes to a fuel, and cathode flow fields for exposing the cathodes to an oxidant. Also included are input and output manifolds defining input and output inner volumes in fluid communication with the cathode flow fields, and at least one blower mounted with one of the manifolds for flowing oxidant through cathode flow fields. The blower can be mounted within an inner volume defined by a manifold, and can be a vane axial or centrifugal blower, and can be driven by a variable speed motor. Multiple blowers can be associated with the cell stack assembly, and can either push or pull (or both) the oxidant through the cathode flow fields. In a fuel cell stack assembly having fuel cells arranged in separate stacks, each stack has a blower associated therewith.

### DISCLOSURE

This disclosure of aspects of airflow control are directed to systems, structures, and methods that direct the flow in a desired pattern to control the routing and delivery of airflow in a fuel cell system. According to the present invention there is provided a method to provide airflow to a fuel cell stack and a cooling fan within a housing according to Claim 1 and a system to adjust the airflow to a fuel cell stack within a housing according to Claim 10. Preferred embodiments of the invention are defined in Claims 2 to 9 and 11 to 18. In the following description, embodiments will be described. These embodiments fall within the scope of the present invention only if they are in accordance with Claim 1 or Claim 10.

The foregoing needs are met by the various aspects of coolant distribution systems, fuel cell power systems, and methods of use disclosed throughout this application. According to some aspect of the disclosure a method to provide airflow to a fuel cell stack and a cooling fan within a housing the method is taught including. placing a fuel cell stack in fluid communication with a fan both of which are within a housing; fluidly connecting a predetermined minimum volume of airflow through the housing to the fan by one or more of the following modes;
A. Limit airflow to an air intake face of the fuel cell stack by diverting a portion of the airflow from the fuel cell stack via a bypass assembly which is downstream of the fuel cell stack;
B. Divert a portion of the airflow from the air intake face via the bypass assembly and reduce airflow from the fuel cell stack cathode exhaust via closing one or more louvers placed between the cathode exhaust and the fan;
C. Adjust airflow from the fuel cell stack cathode exhaust face to the fan via closing louvres and closing off at least a portion of apertures through louvres;
D. Open bypass valves and open louvres whereby airflow is provided to both the intake face and fan;
E. Open bypass valves, close louvres and one of close apertures and at least a portion of apertures through the louvres; and,
F. Close bypass valves and one of open or close louvres.

In some instances, each louvre is configured to close via a magnetic catch in the housing. In some instances each louvre consists of two plates, each plate containing apertures wherein the plates are configured to nest together and when the louvres are closed the apertures adjusted via the controller from closed to fully open by sliding one plate relative to the other via the action of a cam. In some instances, at least one of the two plates has a surface coating thereon facing the other plate which is configured to have greater lubricity than the uncoated plate. In some instances, the apertures are elongated horizontal ovoids. In some instances, at least a portion of the apertures are isosceles trapezoids. In some instances, the method further includes forming on the inside the housing nearest the air intake face a convex shaped portion which adds turbulence to airflow into the air intake face. In some instances, the method further includes forming adjacent to the fuel cell stack air intake face air flow disruption fingers wherein the linear flow of intake air into the fuel cell stack is made more turbulent.

In some instance the fan is placed upstream of the fuel cell stack. In some instances the fan is placed downstream of the fuel cell stack. In some instances the bypass valves are placed downstream from the fuel cell stack. In some instances the bypass valves are placed upstream from the fuel cell stack. In some instances the fan si placed upstream of the fuel cell stack and the fluid control assembly is placed downstream from the fuel cell stack.

According to some aspect of the disclosure a system and method to adjust the airflow flow to a fuel cell stack within a housing including a partially open housing configured to contain at least one fluid channel, fuel cell stack, a fan and a fluid control assembly and provide an airflow; the fluid control assembly comprising at least one bypass valve and at least one louvre with adjustable apertures formed therethrough; a controller; wherein said fluid channel is in fluid connection with the fluid control assembly, wherein the controller controls at least one of the bypass valve, louvre and closing or opening of apertures; and, wherein a control of the volume of air flowing to the fan and to the fuel cell stack is adjusted based on the operational mode.

In some instances, a bypass motor controls the opening and closing of bypass vents. In some instances, a louvre control assembly controls the movement of louvres and the opening or closing of the apertures. In some instances, a louvre control assembly controls the movement of louvres and the opening or closing of the apertures and a bypass motor controls the opening and closing of bypass vents. In some instances, the louvre control assembly further comprises a drive shaft passing through each louvre and connecting to a cam affixed to said louvre. In some instances a lower drive section is affixed to the drive shaft; an upper drive section movably affixed to a drive shaft between the lower drive section and a drive shaft guide; a spring movable affixed to the drive shaft between the upper drive section and the drive shaft guide; whereby a nested plate moves upward or downward relative to a second nested plate by way of the cam and spring.

In some instances, a first surface of at least one nested plate is polished to reduce roughness. In some instances, a first surface of at least one nested plate is coated to one of reduce roughness and increase lubricity. In some instances, the louvre control assembly is further configured to adjust at least one of oxygen flow to the fuel cell stack and dilute purge flow from the fuel cell stack.

According to some aspect of the disclosure a method and system of a fluid control assembly including a flow control housing further comprising a fan duct, a magnetic catch, a louvre control assembly, louvres configured with variable apertures therein, at least one bypass duct, at least one by pass valve, a bypass motor and, the bypass duct(s) are in fluid connection with the flow control housing.

In some instances, louvres are formed of two sliding nested plates each with apertures that align in a first position and have a variable opening when they are displaced and a closed opening when fully displaced. In some instances, the louvre control assembly controls the movement of louvres and the opening or closing of the apertures. In some instances louvre control assembly controls the movement of louvres and the opening or closing of the apertures and a bypass motor which controls the opening and closing of bypass vents configured to open and close fluid flow through the at least one bypass ducts . In some instances, the louvre control assembly further comprises a drive shaft passing through each louvre and connecting to a cam affixed to said louvre.

In some aspects, the system may include one or more sensors therein. The one or more sensors may be configured to detect a parameter of the system. In some aspects, the sensors may be configured to detect the temperature of the fuel cells and/or the fuel cell stack, the temperature of the coolant entering the system, the temperature of the coolant after the coolant fluid has passed out of the system, the pressure of the coolant fluid, the flow rate of the coolant fluid, the composition of the coolant fluid, the velocity of the coolant fluid as it is exhausted out of the exhaust port, or another parameter of the coolant fluid or the fuel cell stack.

In some aspects, the means for directing the coolant flow may operate according to a variety of parameters, such as, but not limited to (to the extent that they exist in the specific embodiment), size or shape of the fuel cell stack, the distance between the fuel cell stack and the means for directing the coolant flow, the number of fuel cells within the fuel cell stack, the number of fuel cell stacks in the system, the relative arrangement of each fuel cell stack, the material of the means for directing the coolant flow, the texture of the means for directing the coolant flow, the velocity of the coolant flow through the system, the makeup of the coolant, the temperature of the fuel cell stack, the desired temperature of the fuel cell stack, the desired application of the system, any combination of the above parameters, and/or any other suitable parameter that can affect the need for distribution of coolant.

According to another aspect of the disclosure, a fuel cell system includes a fuel cell stack, the fuel cell stack having one or more fuel cells therein; and the system for distributing a coolant fluid.

The system for distributing the coolant fluid may be any one or more of the systems described above or may be a combination of embodiments described herein. The system may include none, one, or a plurality of optional aspects described herein.

In some aspects, the fuel cell system may be configured to provide power to a machine handling equipment (MHE) component. Optionally, the MHE component may be a forklift.

In some aspects, the fuel cell system may be configured to provide power to an unmanned aerial vehicles (UAVs). Optionally, the UAV may be a drone. The drone may be a fixed-wing drone. The drone may be a multi-rotor drone.

According to another aspect of the disclosure, a control system for directing coolant through the system for distributing a coolant fluid is disclosed. The control system includes a processor; a power source; and a sensor. The control system is configured to send an operation signal to the system for distributing the coolant fluid to cause the system for distributing the coolant fluid to operate. The system for distributing a coolant flow may be any one or more of the systems described above or may be a combination of embodiments described herein. The system may include none, one, or a plurality of optional aspects described herein.

The control system may include a processor; a power source; and a sensor. The control system is configured to send an operation signal to the system for distributing coolant to cause the system for distributing coolant to operate.

In some aspects, the control system may be configured to communicate with a plurality of sensors. The sensors may be disposed in or on the system for distributing coolant.

Optionally, the control system may be configured to operate based on a program. The program may provide the control system with instructions for operation, which the control system may use to operate the system for distributing coolant and/or the fuel cell system. Optionally, the control system may be operated by a user. The user may send one or more signals to the control system and/or to the system for distributing coolant to operate the systems. Optionally, the control system may be configured to operate autonomously in response to the parameters sensed by the one or more sensors.

### FIGURES

The present application is further understood when read in conjunction with the appended drawings. For the purpose of illustrating the subject matter, there are shown in the drawings exemplary aspects of the subject matter; however, the presently disclosed subject matter is not limited to the specific methods, devices, and systems disclosed. In the drawings:
Fig. 1 is an external view of a system and method disclosed herein for controlling airflow to a fuel cells stack and a fan.
Figs. 2A is a component view which illustrates aspects of exemplary implementations of a system and method disclosed herein for controlling airflow to a fuel cells stack and a fan.
Figs. 2B and 2C illustrate aspects of the fluid control assembly of Fig. 2A.
Figs. 3-4B illustrate aspects of exemplary implementations showing the adjustable airflow of the system and method disclosed herein.
Figs. 4C shows air disruption features in the intake face is a component view which illustrates aspects of exemplary implementations of a system and method disclosed herein for controlling airflow to a fuel cells stack and a fan.
Fig. 5 is a table of some operation modes of the system and method disclosed herein for controlling airflow to a fuel cells stack and a fan.
Figs. 6A-9C illustrate aspects of exemplary implementations showing the adjustable airflow of the system and method disclosed herein.
Fig. 10 illustrates a spectrum of aperture exemplars.
Fig. 11 illustrates an alternate exemplary of a system and method disclosed herein for controlling airflow to a fuel cells stack and a fan via air intake upstream from the fuel cell stack configured to pull fluid through the fuel cell stack .

Aspects of the disclosure will now be described in detail with reference to the drawings, wherein like reference numbers refer to like elements throughout, unless specified otherwise.

### FURTHER DISCLOSURE

Fine control of low volume coolant flow through a fuel cell stack in a small footprint for air cooled fuel cell system has previously eluded a practical solution. Disclosed herein are aspects of methods, devices and systems which utilize air routing, coarse and fine control of airflow to provide consistent fuel cell stack operation in a variety of conditions including but not limited to start-up, hot operation and cold or cool operation.

In a most basic configuration, the systems and methods disclosed herein control fluid flow through a fuel cell stack is controlled via a series of louvres, aperture, and bypass valves. The innovative system provides for coarse and fine adjustment of the fluid flow.

Fans drawing airflow through a fuel cell stack cool the stack dilute expelled hydrogen, enable efficient operation of the stack through a multitude of power requirements, and support parodic purging of the system to preserve membrane efficiency and thus health of the fuel cell stack.

One or more louvre doors are configured to each rotate from a fully closed position through a range of positions to a fully open position and each louvre door is multipart having at least two nesting sliding plates whereby each door in a closed position is configured for one plate to slide vertically upward or downward relative to the other and perpendicular to the cathode exhaust flow whereby the sliding movement opens, partially closes or fully closes a series of aligned apertures in the plates effectively throttling up or down air flow through the closed plates. Although apertures are shown as elongated in the horizontal direction that illustration is not limiting, and other aperture shapes are within the scope of this disclosure. The elongated shape does support large flow volume with less movement of sliding aperture plates and as such in some instance is preferred as it supports at least smaller systems and/or higher flow.

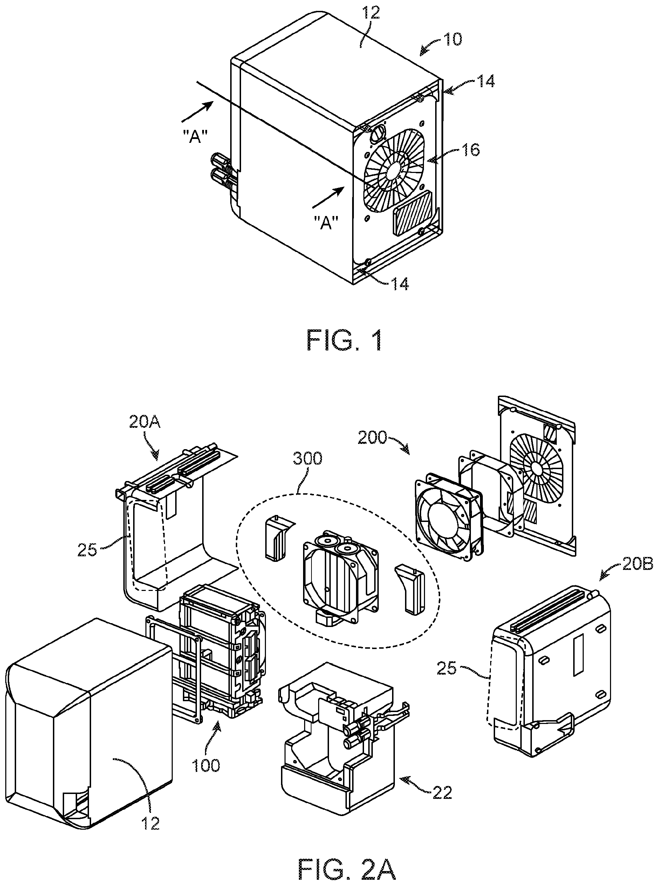

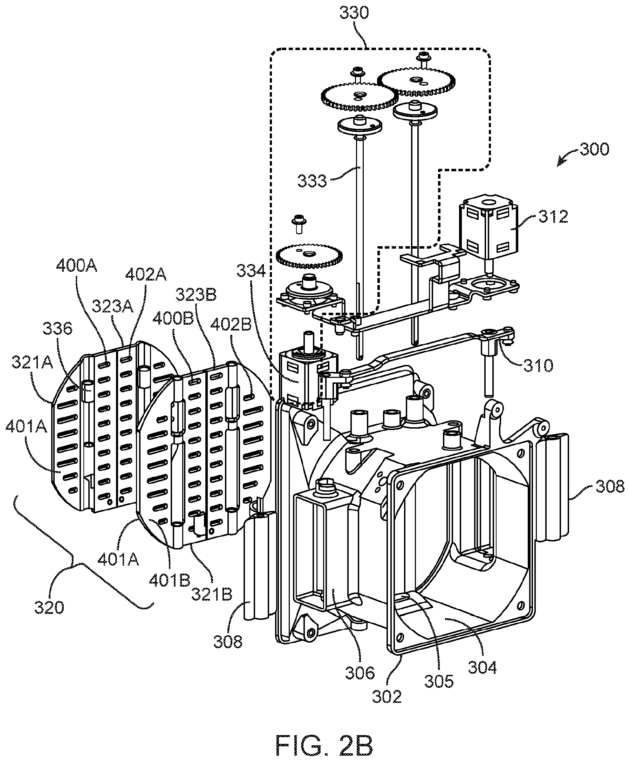

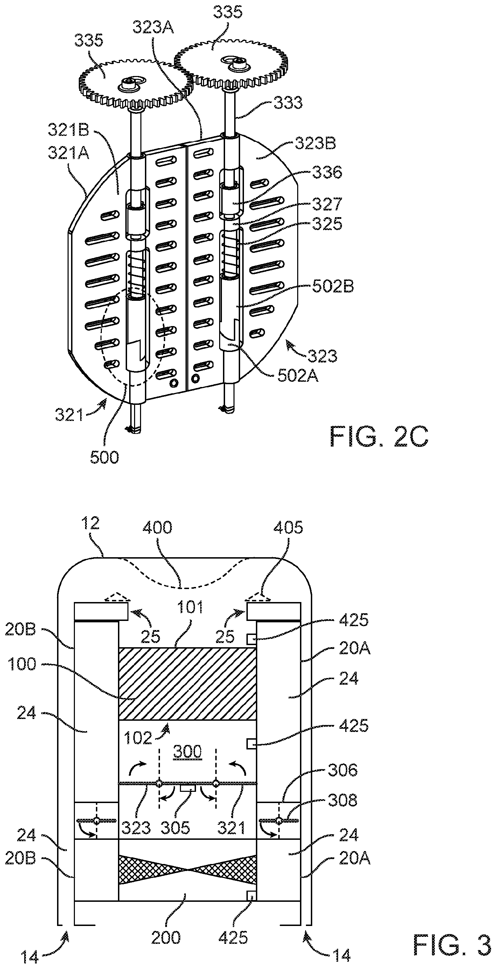

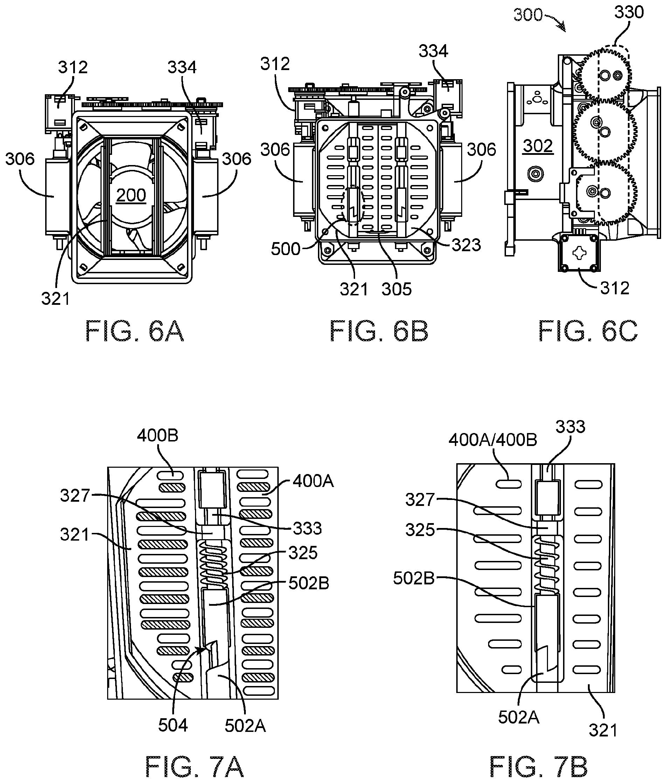

Figures 1-2C show main aspects of the fuel cell air distribution device and system 10. A main housing 12 configured with entryways 14 for air flow into the housing and an exit 16 for fluid flow out of the housing. Within the housing a subassembly shown here as having two sides 20A and a positional insert 22. The subassembly could be formed of less or more pieces and those of ordinary skill in the art or the skilled artisan will recognize such a design choice will remain within the scope of the disclosure. The subassembly surrounds the fuel cell stack 100 at one end a fan 200 at the opposite end and downstream from the fuel cells stack but upstream from the fan is a fluid control assembly 300 which fluidly connects the entryways 14 air pathways through fluid channel 24 to the intake face 25 for the stack whereby air flow travels from the entryways to the fuel cell stack. The subassembly contains a fuel cell stack 100 at one end and a fan 200 and downstream from the fuel cells stack but upstream from the fan is the fluid flow assembly 300. The fluid control assembly is a base which both fluidly connect the cathode exhaust to the fan and controls airflow into and exhaust out of the fuel cell stack. A flow control housing 302 provides a fan duct 304 which supports a magnetic catch 305 to hold louvre doors in a closed position and at least one bypass duct 306. Each by-pass duct houses a valve 308 which can be open or closed via a control arm 310 attached to a bypass motor 312 and controlled by a controller. Aperture louvre doors 320 are affixed movable to the flow control housing. Each door is formed of two plates. A first door consists of nested plates 321A and 321B. Each plate has a first surface 401A and a second surface 401B. Each plate has elongate apertures 400A and 400B formed therethrough which can be aligned. A second door consists of nested plates 323A and 323B and the plates each have elongate apertures 402A and 402B formed therethrough which can be aligned. The nested plates should fit tightly to minimize fluid leakage and at least one of the nested doors should be sufficiently lubricious to slide upward and downward vertically against the other door. A louvre control assembly 330 is affixed to each set of nested door via a drive shaft 333 which fits into a guide formed through the pair of nested doors. A drive motor 334 is part of the louvre control assembly. The drive shafts 333 are driven by a geared connection shown in the louvre control assembly. The geared assembly is not a limitation there are a plethora of means to rotate a shaft or a pair of shaft via gears and motors known in the art. The pass-through guides 336 are not part of the rotation or door movement, the drive shafts are connected to the louvre doors via cams which act to rotate the door open or closed. The magnet 305 stops the doors in the fully closed position (Figure 6B). The magnet is a means to stop the louvre movement, other means such as ball plunger, and other latches and catches are within the scope of this disclosure. It is preferred that rotation of the drive shafts after closure will adjust the apertures from open to partially open to closed. Figures 2C, 7A and 7B shows the nested plates (321A/321B and 323A/323B) forming louvre doors 321 and 323. Each door is movable connected to the drive shaft 333 via a cam 500. The cam has a lower drive section 502A which is affixed to the drive shaft and an upper drive section 502B is affixed to the nested plate which will be driven upward and downward relative to the flow control housing 302. A spring means 325 through which the drive shaft extends is placed between the cam 500 and the louvre guide 327. When the sliding plate is moved upward by the cam action it compresses the spring and when the cam action lowers the sliding plate the spring decompresses and moves the sliding plate downward to align the apertures. Fig. 7A shows the elongated aperture 400A through the first nested plate of louvre door 321 misaligned with the elongated aperture 400B in the second nested plate of louvre door 321 as such the elongated apertures, in this configuration, block fluid flow through that louvre door. The lower drive section 502A of the cam upon rotation of the drive shaft 333 is moved downward to close the gap 504 between the upper and lower drive sections as shown in Fig. 7B and the elongated aperture 400A and 400B are aligned to allow fluid flow, the spring means urges the sliding plate downward during the cam rotation. Moreover, the louvre doors are controlled by the moving means (shown here as a stepper motor 334) the moving means causes the gears 335 to rotate the shafts in a coordinated fashion. In some instances, a motor controller is in signal communication with the moving means. In other instances, the motor control is incorporated within the system controller. If a motor control is present it is in signal communicating with a system controller whereby the louver door and elongated aperture positions are adjusted. The system controller is configured to adjust the bypass valves, louvre doors and apertures is to respond to measurements within the system or conditions of the system. Measurements via sensors 425 include but are not limited to one more of power requirements, temperature, pressure, humidity, hydrogen concentration in the exhaust, stop, fan pulsing, and purging. Sensors are in signal communication with the system controller and may be placed anywhere in the system and the indication of sensors 425 near the intake face 101 of the fuel cell stack near the fluid control assembly and near the fan are not limitations.

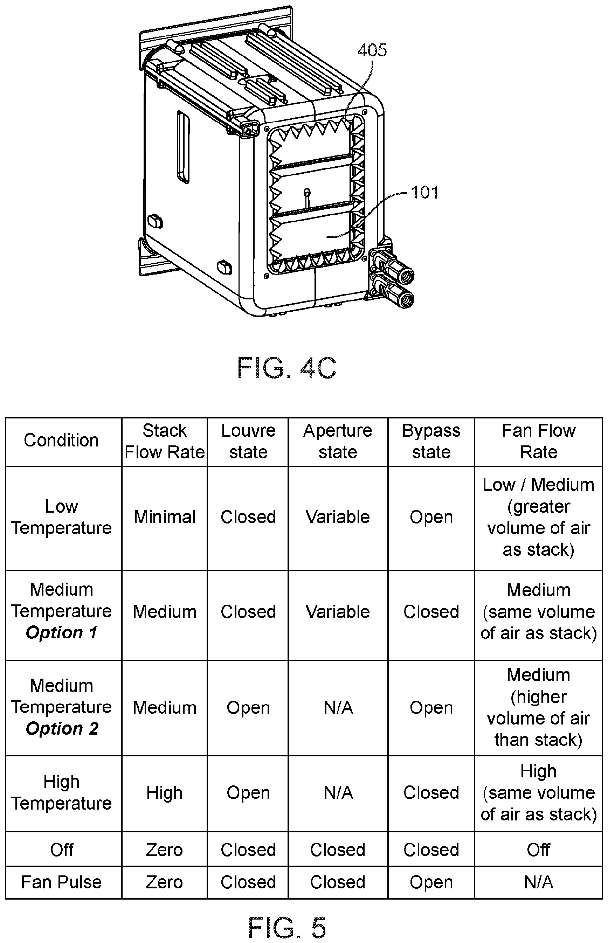

Figures 3 to 4B illustrate a cut away top view looking downward generally along the line of figure 1 at A-A. Only block structures showing main component are provided these figures illustrate airflow during different states of the system. Not all states are shown. Some states go from fully closed with 0% aperture opening through the spectrum to 100% open including all partial opening within that spectrum. For the sake of brevity only fully open louvres, fully closed louvres with fully closed apertures and fully closed louvers with apertures fully open are shown and the absence of in-between state of partially open and closed apertures should not be interpreted as a mere intermediary or non-disclosed invention. Figure 4C shows the exterior of the assembled subassembly and air disrupting fingers formed thereon.

Disclosed herein are methods of operating the fuel cell power system wherein the minimum volume of airflow for the fan 200 to operate is maintained via control of airflow via louvres, bypass valves and apertures. The fan during operation, even at low RPM, moves a minimum volume of air through the system, via the airflow dynamic control disclosed herein when the airflow requirements through the fuel cell stack are less than the minimum airflow requirements of the fan the system controller engages at least one of the bypass valves and the louvres to direct airflow while maintaining the necessary minimum airflow. If less than the minimum airflow is available the fan, the fan is put under increased load thereby reducing efficiency of the system and increasing parasitic loss. The airflow steering by the fluid flow assembly 300 is controlled by the controller.

Fluid flow which includes atmospheric air enters the system via entryways 4 into the fluid channel 24 which is also in fluid connection with the fuel cell stack. The fluid flow assembly 300 also provides for the louvres to go from fully open to fully closed position in a short time period. The rapidity of the opening and closing of the doors in conjunction with the bypass valves and ducts cooperate to provide at least the necessary minimum volume of air to fan and to provide the required volume of airflow to the fuel cell stack first face 101 under a variety of conditions and is this dynamic and responsive to the system sensors 425. Directing airflow from the fluid channel 24 while bypassing the fuel cell stack and doors. Figure 5 is a table illustrating state of operation, operational modes and the coordination of the louvre doors closing and opening with the apertures therein opening and closing and the opening and closing of the bypass valves configured to be operated by at least one controller..

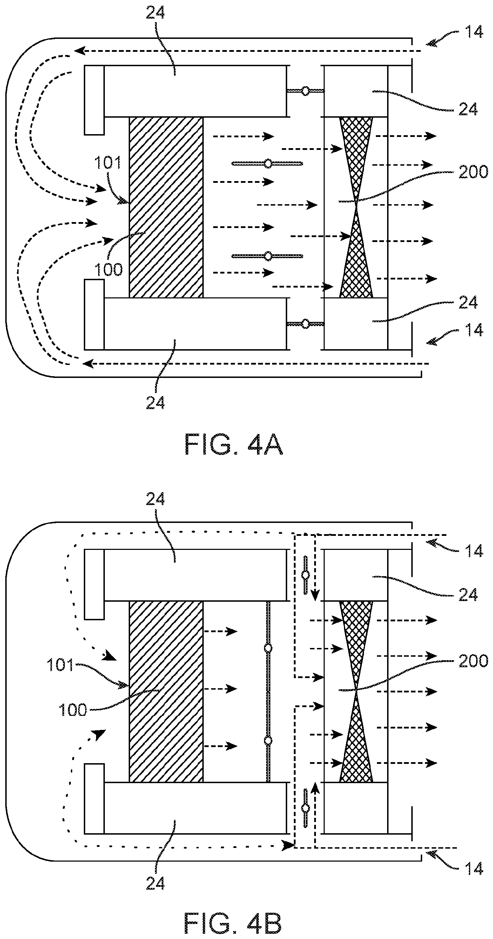

During high temperature operation (see Figure 4A and the table in Fig. 5) the bypass valves 308 are closed and airflow through the fluid channel is not disrupted. Rather, the airflow passes through the fluid channel to the intake face and the louvre doors 321 and 323 are opened to distribute the airflow from the fluid channel to one of the first face 101 and the fan 200. The apertures are in an open state because the open louvre doors have a moving means for the sliding of the doors (321A/321B and 323A/323B) and the at rest state is open.

During high temperature mode operation (Fig. 4A) the largest volume of fluid is passed through the fluid channel to the first face 101 via closing the bypass valves 308 forcing at least 90% of the intake air to be drawn through the stack via the intake face. In this mode it is preferred that 95% of the fluid is drawn through the stack and it is most preferred that 99% or more air is drawn through the stack in this mode. In this first mode the louvers are fully open producing minimal hindrance to the cathode exhaust fluid being expelled from the system via the fan's 200 axial flow. Ideally the same volume of air flowing into the entryways 14 passes through the fuel cell stack. Additional benefits of this operation is to ensure that very low concentration of hydrogen is present within the cathode flow.

During operation of the system it is also beneficial to cause turbidity to the fluid flow which enters the fuel cell stack. The fuel cell stack 100 has a first face 101 and a second face 102. The first face 101 is configured to be in fluid connection with fluid channel 24 and receive air via the intake face 25. To increase dispersion of the fluid flowing within the housing 12 at one end of the housing opposite the first face 101 optionally a convex bump 400 (Fig. 3) may be formed to provide a Coanda effect, the phenomenon in which a jet flow attaches itself to a nearby surface and remains attached even when the surface curves away from the initial jet direction, guiding the air towards the center of the first face. In some instances, air disrupting fingers 405 may also be placed around the intake face to disrupt the fluid flow and cause more even distribution across the first face 101. These flow disruption features when situated on the intake face transform the linear flow of intake fluid into a turbulent flow just prior to being ingested by the fuel cell stack. This helps to distribute the fluid evenly rather than only being drawn into the periphery of the stack. The disrupting fingers and the Coanda effect maybe used cooperatively or separately.

During a low temperature mode configuration (see Figure 4B) the louvre doors 321/323 are closed and the bypass valves 308 are opened to allow a higher volume of air to flow to the fan through the bypass valves then to the fuel cell stack. This configuration and method of operation provides for the majority of fluid in the fluid channel to be expelled rapidly from the system without interacting with the fuel cell stack. In this second mode the elongated apertures 400A and 400B in the closed louvres are used to throttle fluid exiting the stack as cathode exhaust and only allow the necessary volume of intake fluid (such as air) to flow through the fuel cell stack. A controller in signal communications with the means moving the louvre doors which may be the louvre control assembly 330 and the bypass motor 312 and bypass vents 308 are configured to coordinate opening and closing of each to support fuel cell stack and fan operation. The controller is further configured to vary the upward or downward movement of the sliding nested doors forming the louvres to change the volume of fluid which passes through the apertures.

During a first medium temperature mode configuration (see Fig. 5) the louvre doors 321/323 are closed and the bypass valves 308 are closed to direct the same volume of air to flow to the fan and through the fuel cell stack. In this third mode of operation the elongated apertures 400A and 400B in the closed louvres are used to throttle fluid exiting the stack as cathode exhaust and only allow the necessary volume of intake fluid (such as air) to flow through the fuel cell stack. The controller in signal communications with the means moving the louvre doors is configured to vary the upward or downward movement of the sliding nested doors forming the louvres to change the volume of fluid which passes through the apertures.

During a second medium temperature mode configuration (see Fig. 5) the louvre doors 321/323 are open and the bypass valves 308 are open thus providing a larger volume of air flow to the fan than the fuel cell stack.

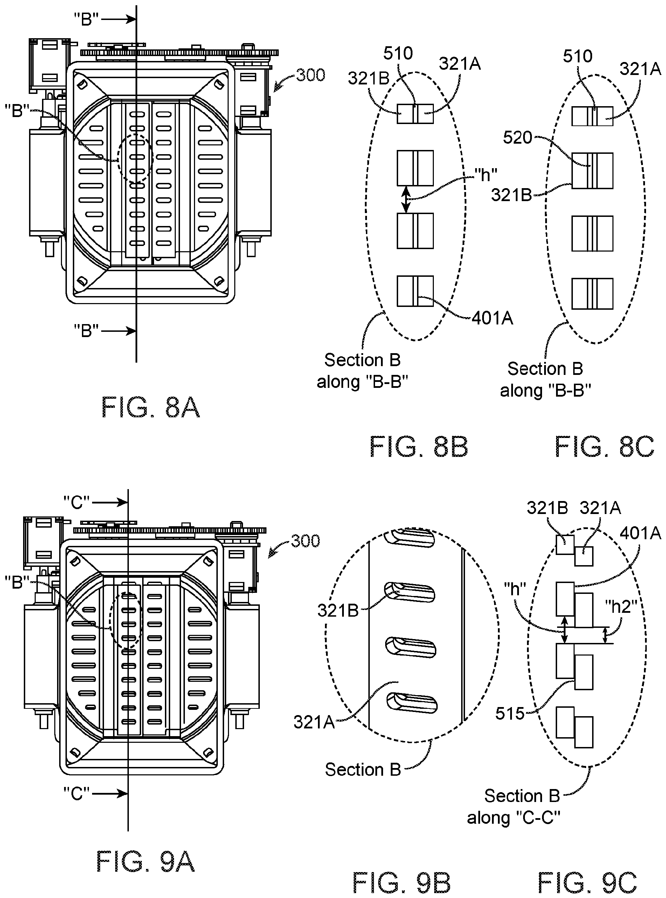

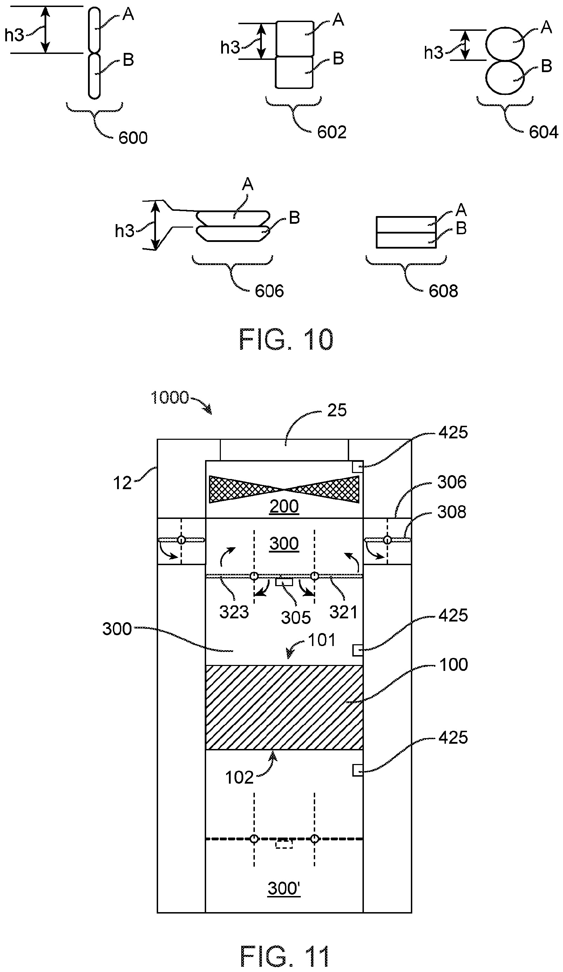

Figures 6A-6C show basic operation louvre doors. In high temperature mode when maximum airflow through the fuel cell stack is required the louvre doors 321/323 are open (Fig. 6A) and the by-pass valves are closed. In a restricted fluid flow configuration, which is one of low temperature or medium temperature the louvre doors 321/323 are closed (Fig. 6B) the magnet 305 holds them in the closed position and cams 500 are in the lowered position whereby the elongated apertures 402A/402B are aligned in the open position and configured so that maximum fluid volume which can flow through the aligned apertures. Fig. 6C shows a top view of the flow control housing 302 and the cooperative gears forming the means to both open and close the louvres and to slide upward and downward one of the nested plates 321A/321B and 323A and 323B. Fig. 7A and 7B show a partial vie of the apertures closed off and a partial view of the apertures aligned and open via the cam movement. Figures 8A-8C illustrate aperture operation and nested door configurations. The louvre doors are shown open and section "B" is a close up of a louvre door and elongated aperture. Figure 8B illustrates an edge view of the nested doors in section "B" along the line of arrow "B-B" with a coating 510 formed on the first surface 401A of nesting plate 321A. The coating is configured with high lubricity (such a PTFE, ceramic, or other materials more lubricous than the material the plate is formed of) to facilitate the movement of the nested door against the nested plate 321B. The elongated aperture has a height of "h" and when the nested plates are aligned the apertures cooperate to form a fluid passage with height "h". Figure 8C illustrates a edge view of an alternative set of nested plates in section "B" along the line of arrow "B-B" with a coatings 510 formed on the first surface of a first nesting plate 321A and coating 520 formed on the first surface of the second nesting plate 321B. The coating is configured with high lubricity to facilitate the movement of the nested door against the second nest door 321B. Figures 9A-9C illustrate aperture operation and nested door configurations. The louvre doors are shown partially closed section "B" is a close up of a louvre door and elongated aperture. Figure 9B illustrates the partial closure. Figure 9C illustrates an edge view of the nested doors in section "B" along the line of arrow "C-C" the elongated aperture has a height of "h" however when the nested doors are throttled or partially closed the apertures cooperate to form a fluid passage with height "h2" thereby reducing the fluid flow. In this embodiment. The nested plates are not described as coated. However, the first surface 410A of each nesting plates may be coated or it may be polished or have other surface finishing applied to reduce roughness to support smooth sliding. Additionally, at least one plate may be formed of a single material with sufficient lubricity to promote smooth sliding. Figure 10 illustrates a variety of additional aperture shapes all of which are within the scope of this disclosure. The displacement of one sliding plate to fully close an aperture is defined by height "h3" which is equal to the height of a single one of the two apertures. Vertical apertures 602 require more displacement to close off then square apertures 604 or round apertures 604. Elongated apertures 606 and 608 require less displacement. Our testing has found the elongated ovoid apertures 400A/400B provide controllable airflow with minimal displacement.

Figure 11 illustrates a cut away top view showing main component of a of a system and method disclosed herein for controlling airflow to a fuel cells stack and a fan via air intake upstream from the fuel cell stack. The operational modes are the same as those described in references to Figures 3-4B and 6A-10.

The air intake face 25 through the housing provides a fluid pathway for air 1000 entering the system. The air enters the fan 200 and is blown towards the first face 101 of the fuel cell stack 100 to provide cooling therein. fluid control assembly 300 is preferably provided upstream from the fuel cell stack. However, in some instances a fluid control assembly 300' may be positioned downstream from the fuel cell stack with the bypass valves 308 positioned in bypass ducts 308 upstream from the fuel cell stack.

When the fuel cell stack is upstream of the fan the fan will operate to pull air flow through the stack which results in a more uniform air distribution across the air inlet face 101 of the stack then pushing air through the stack as shown in Fig.11. The pulling of air through provides uniform cooling which enhances fuel cell stack performance. Additionally, in the air pull configuration with the fan downstream of the fuel cell stack the fan can be mounted in close proximity to the fuel cell stack outlet face 102 which results in greater volumetric power density for the system as opposed to the air pushing embodiment wherein the fuel cell stack is placed downstream of the fan so that airflow from the fan is pushed into the first face 101 (inlet face) of the fuel cell stack.

In Figure 11 the pushing air configuration is shown and this embodiment has the advantage of maximizing the fan's efficiency as opposed to pulling (or sucking) air through the system. The air pushing fan arrangement moves cool ambient air, rather than air which has been heated when it passed through the fuel cell stack. The cooler air has a higher density so for a given volume of air being moved thereby resulting in a greater mass of air provided to the fuel cell stack and therefore a greater cooling potential is available. However, when air 1000 is pushed to the first face 101 there is less uniform air distribution without the addition of complex structures to smooth the airflow or forming a large distance between the fuel cell stack and fan. If there is a relatively large distance between the stack and the fan then this increases the minimum volume of the entire system and means that an inferior volumetric power density is achieved relative to the system.

The systems described throughout this disclosure can be utilized in a variety of applications for providing power generated by fuel cells. In some aspects, the systems disclosed throughout this application can be used in machine handling equipment (MHE), such as a forklift. In some aspects, the systems can be used in an unmanned aerial vehicle (UAV), such as a fixed or multi-rotor drones. In some aspects, the systems disclosed herein can be used in automotive applications, such as in cars. It will be appreciated that the systems can be used in a variety of other applications, and the certain functional and physical parameters, such as component sizes and quantities, may be varied for specific applications and may be dictated by requirements for specific uses. Additional advantages to those described above include being able to fit the systems and related components (such as fuel cannister cylinders) into smaller spaces and to arrange systems and related components.

The components disclosed herein may utilized known materials that are used in the industry.

Throughout this specification, words are to be afforded their normal meaning as would be understood by those skilled in the relevant art. However, so as to avoid misunderstanding, the meanings of certain terms will be specifically defined or clarified.

The invention is defined by the appended claims.

Features of the disclosure that are described above in the context of separate embodiments may be provided in combination in a single embodiment. Conversely, various features of the disclosure that are described in the context of a single embodiment may also be provided separately or in any sub-combination. Finally, while an embodiment may be described as part of a series of steps or part of a more general structure, each said step may also be considered an independent embodiment in itself, combinable with others.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

## Claims

1. A method to provide airflow to a fuel cell stack and a cooling fan within a housing, the method comprising:
placing a fuel cell stack in fluid communication with a fan both of which are within a housing;
fluidly connecting a predetermined minimum volume of airflow through the housing to the fan by one or more of the following modes;
A. adjust airflow from the fuel cell stack cathode exhaust face to the fan via closing louvres and closing off at least a portion of apertures through the face of louvres; and
B. open bypass valves, close louvres and one of close apertures and at least a portion of apertures through the face of louvres.

2. The method of claim 1, wherein each louvre is configured to close via a magnetic catch in the housing.

3. The method of claim 1, wherein each louvre consists of two plates, each plate containing apertures wherein the plates are configured to nest together and when the louvres are closed the apertures adjusted via the controller from closed to fully open by sliding one plate relative to the other via the action of a cam (500).

4. The method of claim 3, wherein at least one of the two plates has a surface coating thereon facing the other plate which is configured to have greater lubricity than the uncoated plate.

5. The method of claim 3 or 4, wherein the apertures are elongated horizontal ovoids.

6. The method of claim 5, wherein at least a portion of the apertures are isosceles trapezoids.

7. The method of claim any of the preceding claims, further comprising forming on the inside the housing nearest the air intake face a convex shaped portion which adds turbulence to airflow into the air intake face.

8. The method of any of the preceding claims, further comprising forming adjacent to the fuel cell stack air intake face air flow disruption fingers wherein the linear flow of intake air into the fuel cell stack is made more turbulent.

9. The method of claim 1, wherein:
the fan is positioned downstream from the exhaust of the fuel cell stack; and,
a fluid control assembly is configured to change the volume of airflow pulled through the fuel cell stack by the fan.

10. A system to adjust the airflow to a fuel cell stack within a housing comprising:
a partially open housing configured to contain at least one fluid channel (24), fuel cell stack (100), a fan (200) and a fluid control assembly (300) and provide an airflow;
the fluid control assembly comprising at least one bypass valve and at least one louvre with adjustable apertures formed therethrough;
a controller;
wherein said fluid channel is in fluid connection with the fluid control assembly;
wherein the controller controls at least one of the bypass valve, louvre and closing or opening of apertures; and,
wherein control of a volume of airflow to the fan and to the fuel cell stack is configured to be adjusted based on an operational mode.

11. The system of claim 10, wherein the controller comprises a bypass motor (312) to control the opening and closing of bypass vents (308).

12. The system of claim 10, wherein the controller comprises a louvre control assembly (330) to control the movement of louvres and the opening or closing of the apertures.

13. The system of claim 10, wherein the controller comprises a louvre control assembly (330) to control the movement of louvres and the opening or closing of the apertures and a bypass motor (312) to control the opening and closing of bypass vents (308).

14. The system of claim 12 or 13, wherein the louvre control assembly (330) further comprises a drive shaft (333) passing through each louvre and connecting to a cam affixed to said louvre.

15. The system of claim 14, wherein the cam further comprises:
a lower drive section (502A) affixed to the drive shaft (333);
an upper drive section (502B) movably affixed to a drive shaft between the lower drive section and a drive shaft guide (327); and
a spring movable affixed to the drive shaft between the upper drive section and the drive shaft guide;
whereby a nested plate (323B) moves upward or downward relative to a second nested plate (323A) by way of the cam and spring.

16. The system of claim 15, wherein the first surface of at least one nested plate is polished to reduce roughness.

17. The system of claim 15, wherein the first surface of at least one nested plate is coated to one of reduce roughness and increase lubricity.

18. The system of any of claims 12 to 17, wherein the louvre control assembly (330) is further configured to adjust at least one of oxygen flow to the fuel cell stack and dilute purge flow from the fuel cell stack.

## Patentansprüche

1. Ein Verfahren zum Bereitstellen eines Luftstroms zu einem Brennstoffzellenstapel und einem Kühlgebläse innerhalb eines Gehäuses, wobei das Verfahren Folgendes umfasst:
Platzieren eines Brennstoffzellenstapels in Fluidkommunikation mit einem Gebläse, die beide innerhalb eines Gehäuses sind;
fluidisches Verbinden eines vorherbestimmten Mindestluftstromvolumens durch das Gehäuse mit dem Gebläse durch einen oder mehrere der folgenden Modi:
A. Verstellen des Luftstroms von der Brennstoffzellenstapelkathodenauslassseite zu dem Gebläse durch Schließen von Lamellen und Absperren mindestens eines Teils von Aperturen durch die Lamellenseite; und
B. Öffnen von Bypass-Ventilen, Schließen von Lamellen und eines von Schließen von Aperturen und mindestens eines Teils von Aperturen durch die Lamellenseite.

2. Verfahren nach Anspruch 1, wobei jede Lamelle dazu konfiguriert ist, durch einen Magnetverschluss in dem Gehäuse geschlossen zu werden.

3. Verfahren nach Anspruch 1, wobei jede Lamelle aus zwei Platten besteht, wobei jede Platte Aperturen enthält, wobei die Platten dazu konfiguriert sind, miteinander verschachtelt zu werden und wenn die Lamellen geschlossen sind, die Aperturen über die Steuereinheit durch Verschieben einer Platte relativ zu der anderen über die Wirkung einer Nocke (500) von geschlossen zu vollständig geöffnet verstellt werden.

4. Verfahren nach Anspruch 3, wobei mindestens eine der zwei Platten auf dieser eine der anderen Platte zugewandte Oberflächenbeschichtung aufweist, die dazu konfiguriert ist, eine größere Gleitfähigkeit als die unbeschichtete Platte aufzuweisen.

5. Verfahren nach Anspruch 3 oder 4, wobei die Aperturen längliche, horizontale Ovoide sind.

6. Verfahren nach Anspruch 5, wobei mindestens ein Teil der Aperturen gleichschenklige Trapezoide sind.

7. Verfahren nach einem der vorhergehenden Ansprüche, das ferner das Bilden auf der Innenseite des Gehäuses am nächsten zu der Luftansaugseite eines konvex geformten Teils umfasst, der dem Luftstrom in die Luftansaugseite Turbulenz hinzufügt.

8. Verfahren nach einem der vorhergehenden Ansprüche, das ferner das Bilden neben der Brennstoffzellenstapelluftansaugseite von Luftstromstörungsfingern umfasst, wobei der lineare Strom von Ansaugluft turbulenter gemacht wird.

9. Verfahren nach Anspruch 1, wobei:
das Gebläse stromabwärts von dem Auslass des Brennstoffzellenstapels positioniert ist; und
eine Fluidsteuerungsanordnung dazu konfiguriert ist, das durch das Gebläse durch den Brennstoffzellenstapel gezogene Volumen des Luftstroms zu ändern.

10. Ein System zum Verstellen des Luftstroms zu einem Brennstoffzellenstapel innerhalb eines Gehäuses, das Folgendes umfasst:
ein teilweise offenes Gehäuse, das dazu konfiguriert ist, mindestens einen Fluidkanal (24), einen Brennstoffzellenstapel (100), ein Gebläse (200) und eine Fluidsteuerungsanordnung (300) zu enthalten und einen Luftstrom bereitzustellen;
die Fluidsteuerungsanordnung, die mindestens ein Bypass-Ventil und mindestens eine Lamelle mit dort hindurch gebildeten, verstellbaren Aperturen umfasst;
eine Steuereinheit;
wobei der genannte Fluidkanal in Fluidverbindung mit der Fluidsteuerungsanordnung steht;
wobei die Steuereinheit mindestens eines von dem Bypass-Ventil, Lamelle und Schließen oder Öffnen von Aperturen steuert; und
wobei die Steuerung eines Luftstromvolumens zu dem Gebläse und dem Brennstoffzellenstapel dazu konfiguriert ist, basierend auf einem Betriebsmodus verstellt zu werden.

11. System nach Anspruch 10, wobei die Steuereinheit einen Bypass-Motor (312) umfasst, um das Öffnen und Schließen von Bypass-Klappen (308) zu steuern.

12. System nach Anspruch 10, wobei die Steuereinheit eine Lamellensteuerungseinheit (330) umfasst, um die Bewegung von Lamellen und das Öffnen oder Schließen der Aperturen zu steuern.

13. System nach Anspruch 10, wobei die Steuereinheit eine Lamellensteuerungseinheit (330) umfasst, um die Bewegung von Lamellen und das Öffnen oder Schließen der Aperturen zu steuern, und einen Bypass-Motor (312) umfasst, um das Öffnen und Schließen von Bypass-Klappen (308) zu steuern.

14. System nach Anspruch 12 oder 13, wobei die Lamellensteuerungseinheit (330) ferner eine Antriebswelle (333) umfasst, die durch jede Lamelle hindurch geht und mit einer an der genannten Lamelle befestigten Nocke verbunden ist.

15. System nach Anspruch 14, wobei die Nocke ferner Folgendes umfasst:
einen unteren Antriebsabschnitt (502A), der an der Antriebswelle (333) befestigt ist;
einen oberen Antriebsabschnitt (502B), der an einer Antriebswelle zwischen dem unteren Antriebsabschnitt und einer Antriebswellenführung (327) bewegbar befestigt ist; und
eine Feder, die an der Antriebswelle zwischen dem oberen Antriebsabschnitt und der Antriebswellenführung bewegbar befestigt ist;
wobei sich eine verschachtelte Platte (323B) relativ zu einer zweiten verschachtelten Platte (323A) mittels der Nocke und Feder aufwärts oder abwärts bewegt.

16. System nach Anspruch 15, wobei die erste Oberfläche von mindestens einer verschachtelten Platte poliert ist, um die Rauheit zu reduzieren.

17. System nach Anspruch 15, wobei die erste Oberfläche von mindestens einer verschachtelten Platte für mindestens eines von Reduzieren der Rauheit und Erhöhen der Gleitfähigkeit beschichtet ist.

18. System nach einem der Ansprüche 12 bis 17, wobei die Lamellensteuerungseinheit (330) ferner dazu konfiguriert ist, mindestens eines von Sauerstoffstrom zu dem Brennstoffzellenstapel zu verstellen und Spülstrom von dem Brennstoffzellenstapel zu verdünnen.

## Revendications

1. Procédé pour fournir un écoulement d'air à un empilement de piles à combustible et un ventilateur de refroidissement à l'intérieur d'un carter, le procédé comprenant :
placer un empilement de piles à combustible en communication fluidique avec un ventilateur, ceux-ci se trouvant tous les deux à l'intérieur d'un carter ;
mettre un volume minimum prédéterminé d'écoulement d'air à travers le carter en liaison fluidique avec le ventilateur d'une ou de plusieurs des manières suivantes :
A. ajuster un écoulement d'air de la face de sortie de cathode de l'empilement de piles à combustible au ventilateur par le biais de la fermeture de volets et de la fermeture d'au moins une partie d'orifices formés à travers la face des volets ; et
B. ouvrir des vannes de dérivation, fermer des volets et fermer des orifices ou au moins une partie d'orifices formés à travers la face des volets.

2. Procédé selon la revendication 1, dans lequel chaque volet est conçu pour être fermé par le biais d'une pièce de retenue magnétique dans le carter.

3. Procédé selon la revendication 1, dans lequel chaque volet est composé de deux plaques, chaque plaque contenant des orifices, les plaques étant conçues pour s'emboîter et, lorsque les volets sont fermés, les orifices étant ajustés, par le biais du dispositif de commande, d'un état fermé à un état entièrement ouvert en faisant coulisser une plaque relativement à l'autre par l'action d'une came (500).

4. Procédé selon la revendication 3, dans lequel au moins une des deux plaques est pourvue d'un revêtement de surface faisant face à l'autre plaque qui est conçu pour présenter un pouvoir lubrifiant supérieur à celui de la plaque non revêtue.

5. Procédé selon la revendication 3 ou 4, dans lequel les orifices sont des ovoïdes horizontaux allongés.

6. Procédé selon la revendication 5, dans lequel au moins une partie des orifices sont des trapèzes isocèles.

7. Procédé selon l'une quelconque des revendications précédentes, comprenant, en outre, le fait de former, au niveau d'un emplacement intérieur du carter situé le plus près de la face d'entrée d'air, une partie de forme convexe qui introduit de la turbulence dans l'écoulement d'air pénétrant dans la face d'entrée d'air.

8. Procédé selon l'une quelconque des revendications précédentes, comprenant, en outre, le fait de former, près de la face d'entrée d'air de l'empilement de piles à combustible, des saillies de perturbation d'écoulement d'air, l'écoulement linéaire de l'air en entrée pénétrant dans l'empilement de piles à combustible étant ainsi plus turbulent.

9. Procédé selon la revendication 1, dans lequel :
le ventilateur est placé en aval de la sortie de l'empilement de piles à combustible ; et
un ensemble de régulation de fluide est conçu pour changer le volume d'écoulement d'air entraîné à travers l'empilement de piles à combustible par le ventilateur.

10. Système pour ajuster l'écoulement d'air reçu par un empilement de piles à combustible à l'intérieur d'un carter comprenant :
un carter partiellement ouvert conçu pour contenir au moins un canal à fluide (24), un empilement de piles à combustible (100), un ventilateur (200) et un ensemble de régulation de fluide (300) et assurer un écoulement d'air ;
l'ensemble de régulation de fluide comprenant au moins une vanne de dérivation et au moins un volet comportant des orifices ajustables formés à travers lui ;
un dispositif de commande ;
dans lequel ledit canal à fluide est en liaison fluidique avec l'ensemble de régulation de fluide ;
dans lequel le dispositif de commande commande la vanne de dérivation, le volet et/ou la fermeture ou l'ouverture des orifices ; et
dans lequel la régulation d'un volume d'écoulement d'air reçu par le ventilateur et l'empilement de piles à combustible est conçue pour être ajustée sur la base d'un mode de fonctionnement.

11. Système selon la revendication 10, dans lequel le dispositif de commande comprend un moteur de dérivation (312) destiné à commander l'ouverture et la fermeture de passages de dérivation (308).

12. Système selon la revendication 10, dans lequel le dispositif de commande comprend un ensemble de commande de volets (330) destiné à commander le mouvement des volets et l'ouverture ou la fermeture des orifices.

13. Système selon la revendication 10, dans lequel le dispositif de commande comprend un ensemble de commande de volets (330) destiné à commander le mouvement des volets et l'ouverture ou la fermeture des orifices et un moteur de dérivation (312) destiné à commander l'ouverture et la fermeture de passages de dérivation (308).

14. Système selon la revendication 12 ou 13, dans lequel l'ensemble de commande de volets (330) comprend, en outre, un arbre d'entraînement (333) traversant chaque volet et raccordé à une came fixée audit volet.

15. Système selon la revendication 14, dans lequel la came comprend en outre :
une section d'entraînement inférieure (502A) fixée à l'arbre d'entraînement (333) ;
une section d'entraînement supérieure (502B) fixée de manière mobile à un arbre d'entraînement entre la section d'entraînement inférieure et un guide d'arbre d'entraînement (327) ; et
un ressort fixé de manière mobile à l'arbre d'entraînement entre la section d'entraînement supérieure et le guide d'arbre d'entraînement ;
une plaque emboîtée (323B) se déplaçant ainsi vers le haut ou vers le bas relativement à une seconde plaque emboîtée (323A) par le biais de la came et du ressort.

16. Système selon la revendication 15, dans lequel la première surface d'au moins une plaque emboîtée est polie pour réduire sa rugosité.

17. Système selon la revendication 15, dans lequel la première surface d'au moins une plaque emboîtée est pourvue d'un revêtement destiné à réduire sa rugosité ou augmenter son pouvoir lubrifiant.

18. Système selon l'une quelconque des revendications 12 à 17, dans lequel l'ensemble de commande de volets (330) est conçu, en outre, pour ajuster au moins l'un d'un écoulement d'oxygène reçu par l'empilement de piles à combustible et diluer un écoulement de purge provenant de l'empilement de piles à combustible.
